# EUROPEAN PATENT APPLICATION

(11) **EP 0 877 174 A1**
(43) Date of publication of application: **11.11.1998**
(21) Application number: 97303179.2
(22) Date of filing: 09.05.1997
(51) Int. Cl.: F16C 11/00

(54) **Lockable joint**

(71) Applicant: Liu, Yang-Ting, Yuan-Li Town, Miao Li Hsien (TW)
(72) Inventor: Liu, Yang-Ting, Yuan-Li Town, Miao Li Hsien (TW)
(74) Representative: Selby-Lowndes, Guy Francis Charles

(57) **Abstract**

Lockable joint assembly including two elbow joints (A,B) mounted on two opposite ends of a shaft (10) around a screw rod (11), each elbow joint including a fixed elbow (17,17A) having a barrel (172) raised from the periphery and fixed to a locating rod of a mechanism, two movable elbows (16,16A) turned about the shaft and having a respective barrel (162,162A) raised from the periphery and holding a respective rod, two constraint blocks (14,14A) mounted on the shaft and forced to hold down the movable elbows and the fixed elbow in between the movable elbows, two springs (15,15A) elements mounted around the shaft between the movable elbows and the constraint blocks to force them apart; and two levers (13,13A) respectively pivoted to the shaft and turned between a first position in which the constraint blocks are forced into engagement with the movable elbows, causing the movable elbows and the fixed elbow to be firmly retained in position and a second position in which the constraint blocks are released from the movable elbows, for permitting the movable elbows to be respectively turned about the shaft to the desired angle.

## Description

### BACKGROUND OF THE INVENTION

The present invention relates to an elbow joint assembly more particularly relates to a two dimenssional adjustable elbow joint assembly which comprises a shaft and two elbow joints mounted on two opposite ends of the shaft each elbow joint comprising a fixed elbow mounted on the shaft and prohibited from rotary motion relative to it and two movable elbows turned about the shaft relative to the fixed elbow in a plane perpendicular to the shaft and fixed at the desired angle by two constraint blocks by means of the control of two cam levers.

Elbow joints are intensively used in furniture and mechanical devices such as cloth racks, baby carts, sunshades, chairs, antenna stands, etc., for permitting parts of devices to be adjusted to different angles. Regular elbow joints are commonly complicated in structure, and comprised of a big number of parts, therefore they are expensive to manufacture and inconvenient to operate.

### SUMMARY OF THE INVENTION

It is one object of the present invention to provide an elbow joint assembly which is simple in structure and inexpensive to manufacture. It is another object of the present invention to provide an elbow joint assembly which is easy to operate. To achieve these and other objects of the present invention, an elbow joint assembly is provided comprised of a hollow shaft a screw rod inserted through the shaft two cap nuts respectively threaded onto the screw rods outside the shaft two elbow joints retained on a shaft at two opposite ends around the shaft and separated by two sets of stop rods, which are respectively connected to a locating block and a holding-down bolt in a holding-down nut at two opposite sides in parallel to the shaft. Each elbow joint comprises a fixed elbow having a barrel raised from the periphery and fixed to a locating rod of a mechanism, two movable elbows turned about the shat and having a respective barrel raised from the periphery and holding a respective rod two constraint blocks mounted on the shaft and forced to hold down the movable elbows and the fixed elbow in between the movable elbows, two spring elements mounted around the shaft between the movable elbows and the constraint blocks to force them apart; and two levers respectively pivoted to the shaft and turned between a first position in which the constraint blocks are forced into engagement with the movable elbows, causing the movable elbows and the fixed elbow to be firmly retained in position, and a second position in which the constraint blocks are released from the movable elbows, for permitting the movable elbows to be respectively turned about the shaft to the desired angle.

### BRIEF DESCRIPTION OF THE DRAWINGS

Fig. 1 is an exploded view of an elbow joint assembly according to the present invention;
Fig. 2 is an elevational view of the elbow joint assembly shown in Figure 1;
Fig. 3A is a side view of one elbow joint of the elbow joint assembly shown in Figure 2, showing the movable elbows released from the constraint blocks;
Fig. 3B is similar to Figure 3A but showing the movable elbows and the constraint blocks engaged together;
Fig. 3C is a sectional view of Figure 3B; and
Fig 4 is an elevational view of an elbow joint assembly according to an alternate form of the present invention.

### DETAILED DESCRIPTION OF THE PREFERRED EMBODIMENT

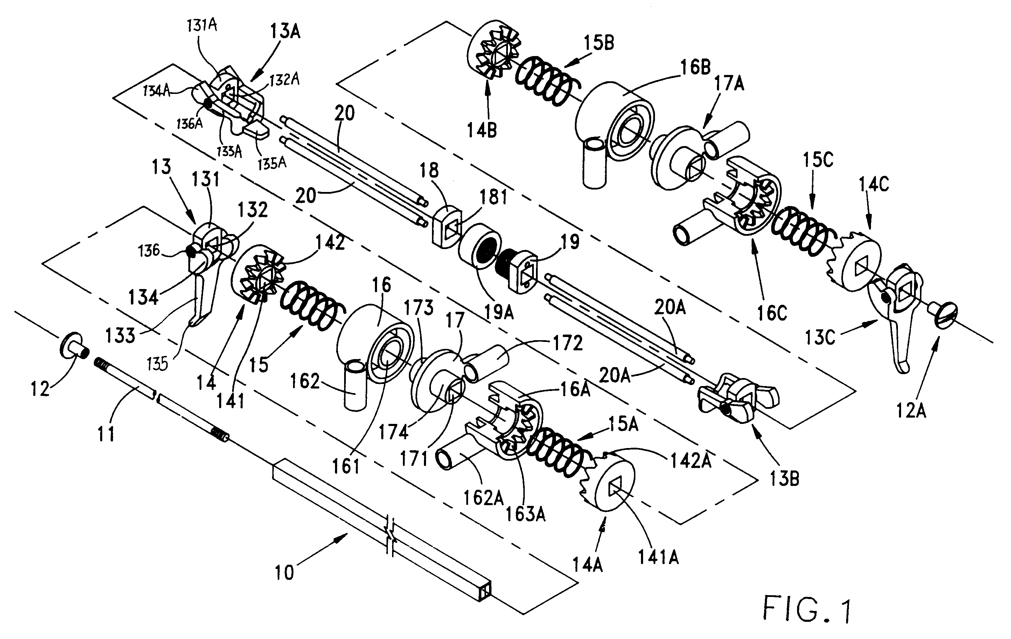

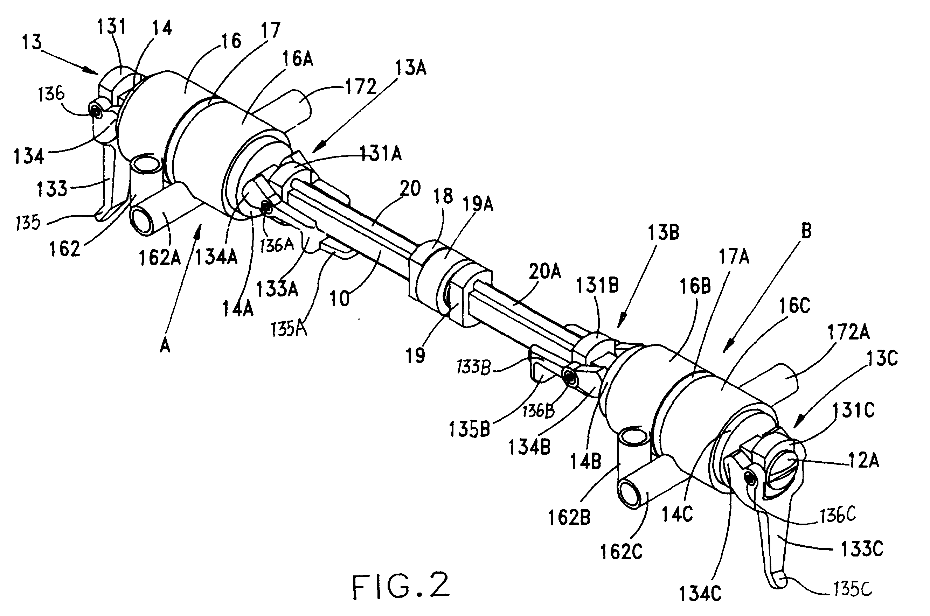

Referring to Figures 1 and 2, an elbow joint assembly in accordance with the present invention is generally comprised of a hollow, polygonal shaft **10**, a screw rod **11** inserted into the shaft **10**, a first cap nut **12** and a second cap nut **12A** respectively threaded onto two opposite ends of the screw rod **11** outside the shall **10,** a locating block **18** mounted around the shaft **10** and having a polygonal center through hole **181** which receives the shaft **10** in such a manner that the locating block **18** is allowed to be moved axially along the shaft **10** but prohibited from rotary motion relative to the shaft **10,** a hollow holding-down bol**t 19** mounted around the shaft **10** and having a polygonal center through hole **191** which receives the shaft **10** in such a manner that the holding-down bolt **19** is allowed to be moved axially along the shaft **10** but prohibited from rotary motion relative to the shaft **10**, a holding-down nut **19A**, a holding-down nut **19A** threaded onto the holding-down bolt **19** and stopped at one side of the locating block **18,** a plurality of first stop rods **20** respectively connected to the locating block **18** and disposed in parallel to the shaft **10,** a plurality of second stop rods **20A** respectively connected to the holding-down bolt **19** and disposed in parallel to the shaft **10** and in longitudinal alignment with the fist stop rods **20,** a first elbow joint **A** mounted around the shaft **10** and stopped between the first stop rods **20** and the first cap nut **12,** and a second elbow joint **B** mounted around the shaft **10** and stopped between the second stop rods **20A** and the second cap nut **12A.**

The first elbow joint **A** comprises a first cam lever **13,** a second cam lever **13A,** a first constraint block **14,** a second constraint block **14A,** a first spring element **15,** a second spring element **15A,** a first movable elbow **16,** a second movable elbow **16A,** and a fixed elbow **17.** The fixed elbow **17** is mounted around the shaft **10** and retained between the first movable elbow **16** and the second movable elbow **16A,** having a polygonal center through hole **171** which receives the shaft **10** in such a manner that the fixed elbow **17** is allowed to be moved axially along the shaft **10** but prohibited from rotary motion relative to the shaft **10,** a first extension tube **173** and a second extension tube **174** respectively raised from two opposite ends around the polygonal center through hole **171,** and a locating barrel **172** raised from the periphery and adapted for securing to a locating rod of a mechanism. The first movable elbow **16** and the second movable elbow **16A** are respectively mounted on the first extension tube **173** and second extension tube **174** of the fixed elbow **17** around the shaft **10,** having a respective circular center through hole **161** or **161A** which receives the extension tube **173** or **174** in such a manner that the movable elbow **16** or **16A** is allowed to be moved axially along the extension tube **173** or **174** and turned about it, a respective barrel **162** or **162A** extended from the periphery for holding a rod, permitting the rod to be turned with the movable elbow **16** or **16A** in a plane perpendicular to the shaft, and a toothed portion **163** or **163A** at an outer side. The first spring element **15** and the second spring element **15A** are respectively mounted around the shaft **10** and retained between the movable elbows **16;16A** and the constraint blocks **14;14A** to force them apart. The first constraint block **14** and the second constraint block **14A** are respectively mounted around the shaft **10** and forced by the first cam lever **13** and the second cam lever **13A** into engagement with the first movable elbow **16** and the second movable elbow **16A,** having each a polygonal center through hole **141** or **141A** which receives the shaft **10** in such a manner that the constraint block **14** or **14A** is allowed to be moved axially along the shaft **10** but prohibited from rotary motion relative to the shaft **10,** and a toothed portion **142** or **142A** at an inner side forced into engagement with the toothed portion **163** or **163A** of the movable elbow **16** or **16A.** The first lever **13** and the second leve**r 13A** are respectively mounted around the shaft **10** and controlled to force the constraint blocks **14;14A** into engagement with the movable elbows **16;16A,** causing the fixed elbow **17** to be firmly retained in between the movable elbows **16;16A.** Each cam lever **13** or **13A** comprises a head **131** or **131A** defining a polygonal center through hole **132** or **132A** which receives the shalt **10** in such a manner that the cam lever **13** or **13A** is allowed to be moved axially along the shaft **10** but prohibited from rotary motion relative to the shaft **10,** a hand grip **133** or **133A** extended from the head **131** or **131 A** and two cams **134** or **134A** bilaterally raised from the head **131** or **131A** and stopped at the constraint block **14** or **14A.** Same as the first elbow joint **A,** the second elbow **B** is comprised of a first cam lever **13B,** a second cam lever **13C,** a first constraint block **14B,** a second constraint block **14C**, a first spring element **15B,** a second spring element **15C,** a first movable elbow **16B,** a second movable elbow **16C,** and a fixed elbow **17A.** As the structure of the second elbow joint **B** is identical to the first elbow joint **A,** it is not described further. The mounting procedure of the second elbow joint **B** is also same as that of the first elbow joint **A.**

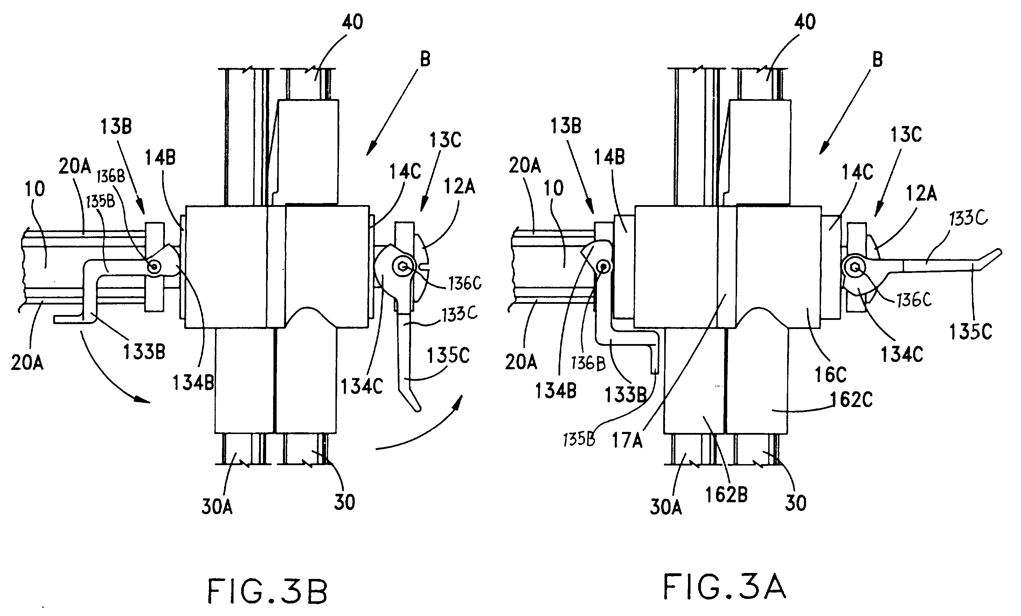

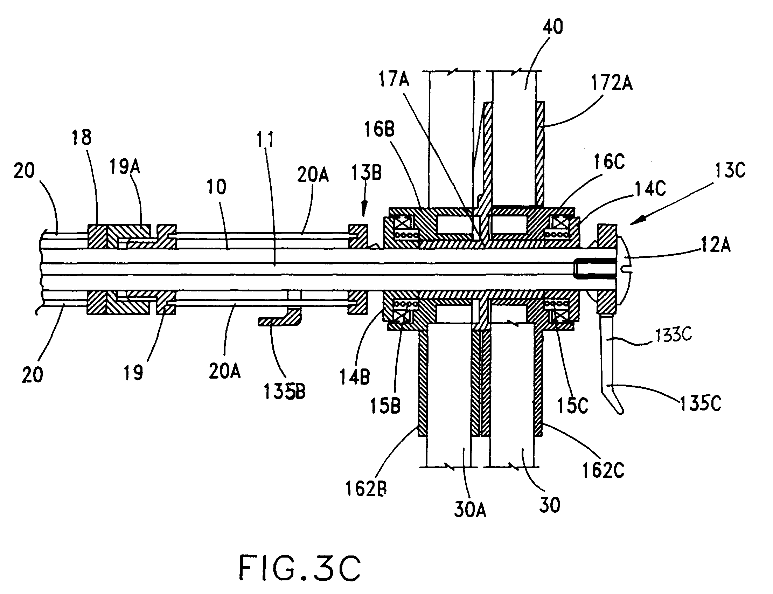

Figures 3A and 3B are side views of the second elbow joint **B,** and figure 3C is a sectional view of Figure 3B**.** The locating barrel **172A** of the fixed elbow **17A** is secured to a support rod **4,** the barrels **162B;162C** of the movable elbows **16B;16C** are secured to rods **30A;30.** When the levers **13B;13C** are released from the constraint blocks **14B;14C** as shown in Figure 3A, the constraint blocks **14B;14C** are forced outwards by the spring elements **15B;15C** and disengaged from the movable elbows **16B;16C,** and therefore the movable elbows **16B;16C** are allowed to be respectively turned about the shaft **10** relative to the fixed elbow **17A** to change the angular positions of the rods **30A;30.** When adjusted, the cam levers **13B;13C** are turned from the position shown in Figure 3A to the position shown in Figure 3B, the constraint blocks **14B;14C** are respectively forced inwards by the cams **134B;134C** into engagement with the movable elbows **16B;16C** again, and therefore the rods **30A;30** are respectively retained in the adjusted positions.

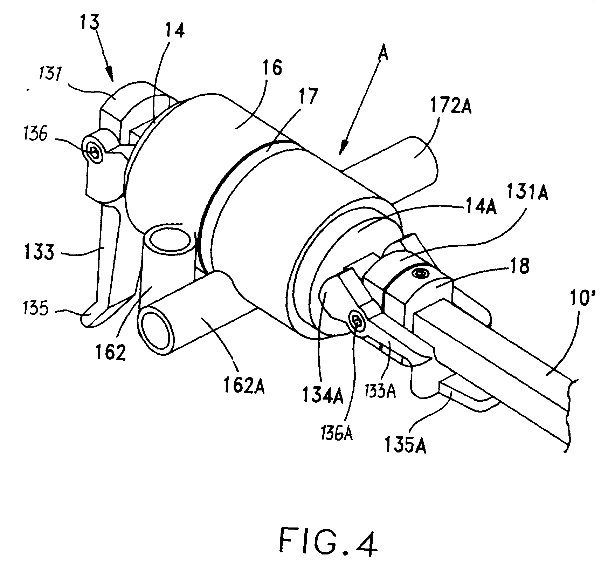

Figure 4 shows an alternate form of the present invention, in which the locating block **18** is fixedly secured to the shaft **10'** by for example a tightening lip screw, to fix the elbow joint **A** in place.

It is to be understood that the drawings are designed for purposes of illustration only, and are not intended as a definition of the limits and scope of the invention disclosed.

## Claims

1. An elbow joint assembly comprising a polygonal hollow shaft having a screw rod throughly inserted therein, two locating blocks fixedly mounted on two opposite ends of said shaft an elbow joint mounted on said shalt and moved between said iocating blocks, said elbow joint comprising:
a fixed elbow mounted around and moved axially along said shaft and prohibited from rotary motion relative to said shaft, said fixed elbow comprising two extension tubes raised from two opposite sides thereof and respectively sleeved onto said shaft, and a locating barrel raised from the periphery perpendicular to said shaft and adapted for securing to a locating rod of a mechanism;
two movable elbows respectively mounted around the extension tubes of said fixed elbow and turned about them, each of said movable elbows having a respective barrel raised from the periphery perpendicular to said shaft and adapted for holding a respective rod, and a respective toothed portion at an outer side;
two constraint blocks respectively mount around and moved axially along said shaft and prohibited from rotary motion relative to said shaft, said constraint blocks having a respective toothed portion at an inner side respectively forced into engagement with the toothed portions of said movable elbows;
two spring elements respectively mounted around said shaft and retained between said movable elbows and said constraint blocks to force them apart; and
two cam levers respectively mounted on said shaft and stopped between said constraint blocks and said locating blocks, and turned between a first position in which said constraint blocks are forced into engagement with said movable elbows, causing said movable elbows and said fixed elbow to be firmly retained in position, and a second position in which said constraint blocks are released from said movable elbows, for permitting said movable elbows to be respectively turned about said shaft to a desired angle.

2. The elbow joint assembly of claim 1 wherein each of said cam levers comprises a head defining a polygonal center through hole which receives said shaft, a hand grip extended from said head for turning by hand, and two cams bilaterally raised from said head and stopped at the corresponding constraint block and turned with the respective lever to move the respective constraint block into engagement with the corresponding movable elbow.

3. An elbow joint assembly comprising:
a hollow shaft;
a screw rod inserted through said hollow shaft;
a first cap nut and a second cap nut respectively threaded onto two opposite ends of said screw rod outside the shaft;
a locating block mounted around said shaft and allowed to be moved axially along said shaft but prohibited from rotary motion relative to it;
a hollow holding-down bolt mounted around said shaft and allowed to be moved axially along said shaft but prohibited from rotary motion relative to it;
a holding-down nut threaded onto said holding-down bolt and stopped at one side of said locating block;
a plurality of first stop rods respectively connected to said locating block and disposed in parallel to said shaft;
a plurality of second stop rods respectively connected to said holding-down bolt and disposed in parallel to said shaft and in longitudinal alignment with said fist stop rods;
a first elbow joint mounted around said shaft and stopped between said first stop rods and said first cap nut; and
a second elbow joint mounted around said shaft and stopped between said second stop rods and said second cap nut;
wherein each of said first elbow joint and said second elbow joint comprises:
a fixed elbow mounted around and moved axially along said shaft and prohibited from rotary motion relative to said shaft said fixed elbow comprising two extension tubes raised from two opposite sides thereof and respectively sleeved onto said shaft, and a locating barrel raised from the periphery and adapted for securing to a locating rod of a mechanism;
two movable elbows respectively mounted around the extension tubes of said fixed elbow and turned about them, each of said movable elbows having a respective barrel raised from the periphery and adapted for holding a respective rod and a respective toothed portion at an outer side;
two constraint blocks respectively mount around and moved axially along said shaft and prohibited from rotary motion relative to said shaft, said constraint blocks having a respective toothed portion at an inner side respectively forced into engagement with the toothed portions of said movable elbows;
two spring elements respectively mounted around said shaft and retained between said movable elbows and said constraint blocks to force them apart; and
two cam levers respectively pivoted to said shaft and stopped at said constraint blocks at an outer side, and turned between a first position in which said constraint blocks are forced into engagement with said movable elbows, causing said movable elbows and said fixed elbow to be firmly retained in position, and a second position in which said constraint blocks are release from said movable elbows, for permitting said movable elbows to be respectively turned about said shaft to a desired angle in a plane perpendicular to said shaft.

4. The elbow joint assembly of claim 3 wherein each of said cam levers comprises a head defining a polygonal center through hole which receives said shaft a hand grip extended from said head for turning by hand, and two cams bilaterally raised from said head and stopped at the corresponding constraint block and turned with the respective lever to move the respective constraint block into engagement with the corresponding movable elbow.
